# EUROPÄISCHE PATENTSCHRIFT

(11) **EP 2 953 997 B1**
(45) Veröffentlichungstag und Bekanntmachung des Hinweises auf die Patenterteilung: **20.09.2017**
(21) Anmeldenummer: 14700176.2
(22) Anmeldetag: 09.01.2014
(51) Int. Cl.: C08J 5/04, C08L 97/00, B29C 70/58

(54) **MIKROSTRUKTURIERTES KOMPOSITMATERIAL, VERFAHREN ZU DESSEN HERSTELLUNG, FORMKÖRPER HIERAUS SOWIE VERWENDUNGSZWECKE**
MICRO-STRUCTURED COMPOSITE MATERIAL, METHOD FOR PRODUCING SAME, MOULDINGS MADE OF SAME, AND USES THEREOF
MATÉRIAU COMPOSITE MICROSTRUCTURÉ, SON PROCÉDÉ DE FABRICATION, CORPS FAÇONNÉ RÉALISÉ DANS CE MATÉRIAU ET APPLICATIONS CORRESPONDANTES

(30) Priorität: 11.02.2013 DE 102013002574
(43) Veröffentlichungstag der Anmeldung: 16.12.2015
(73) Patentinhaber: Fraunhofer-Gesellschaft zur Förderung der angewandten Forschung e.V., 80686 München (DE)
(72) Erfinder: ERDMANN, Jens, 13509 Berlin (DE); ENGELMANN, Gunnar, 14478 Potsdam (DE); GANSTER, Johannes, 14469 Potsdam (DE)
(74) Vertreter: Pfenning, Meinig & Partner mbB
(86) Internationale Anmeldenummer: PCT/EP2014/050256
(87) Internationale Veröffentlichungsnummer: WO 2014/121967

(56) Entgegenhaltungen:
- WO-A1-96/38494
- WO-A1-2012/088711
- DE-A1-102010 052 878
- RU-A- 2003 124 410
- HANSJÖRG NITZ ET AL: "Influence of Lignin Type on the Mechanical Properties of Lignin Based Compounds", MACROMOLECULAR MATERIALS AND ENGINEERING, WILEY VCH VERLAG, WEINHEIM, DE , Bd. 286, Nr. 12 18. Dezember 2001 (2001-12-18), Seiten 737-743, XP002507558, ISSN: 1438-7492, DOI: 10.1002/1439-2054(20011201)286:12<737::AID -MAME737>3.0.CO;2-2 Gefunden im Internet: URL:http://www3.interscience.wiley.com/jou rnal/89010962/abstract [gefunden am 2008-12-09]
- CANETTI M ET AL: "Thermal degradation behaviour of isotactic polypropylene blended with lignin", POLYMER DEGRADATION AND STABILITY, BARKING, GB, Bd. 91, Nr. 3, 1. März 2006 (2006-03-01), Seiten 494-498, XP027949437, ISSN: 0141-3910 [gefunden am 2006-03-01]
- SAILAJA R R N ET AL: "Mechanical and thermal properties of compatibilized composites of polyethylene and esterified lignin", MATERIALS AND DESIGN, LONDON, GB, Bd. 31, Nr. 9, 1. Oktober 2010 (2010-10-01), Seiten 4369-4379, XP027066131, ISSN: 0261-3069, DOI: 10.1016/J.MATDES.2010.03.046 [gefunden am 2010-05-31] in der Anmeldung erwähnt

## Beschreibung

Die vorliegende Erfindung betrifft ein mikrostrukturiertes Kompositmaterial, dessen kontinuierliche Matrix eines thermoplastischen Kunststoffes ein Lignin oder Lignin-Derivat in partikulärer Form (Füllstoff) enthält. Das im thermoplastischen Kunststoff eingebettete Lignin oder Lignin-Derivat ist insbesondere dadurch gekennzeichnet, dass es eine kreisrunde oder elliptische Querschnittsgeometrie aufweist, wobei die Durchmesser bzw. Halbachsen der genannten Querschnitte in einem Bereich von 0,1 µm bis 10 µm liegen. Der thermoplastische Kunststoff kann des Weiteren verschiedene Additive oder weitere thermoplastische Kunststoffe enthalten, bevorzugt ist zur Erhöhung der Kompatibilität zwischen dem thermoplastischen Kunststoff und den Lignin bzw. Lignin-Derivat-Partikeln mindestens ein Haftvermittler enthalten.

Aufgrund der zunehmenden Erdölverknappung und der damit einhergehenden kontinuierlichen Erdölpreissteigerung wecken Biopolymere bzw. Biowerkstoffe, d.h. Werkstoffe basierend auf nachwachsenden Rohstoffen, nicht nur wegen der unerschöpflichen Verfügbarkeit zunehmend großes Interesse in verschiedenen Industriezweigen. Ein strategisches Ziel ist es, technische Anwendungen für Biowerkstoffe zu erschlißen und langfristig technische erdölbasierte Polymerblends zumindest teilweise zu substituieren.

Lignin bildet zusammen mit Cellulose den Hauptbestandteil von Holz, wobei für Nadelhölzer ein Ligningehalt von 25 % bis 30 % und für Laubhölzer zwischen 18 % bis 24 % angenommen wird. Damit ergibt sich eine jährlich nachwachsende Menge von 75 Mrd. Tonnen Lignin. Industriell gewonnen werden davon rund 50 Mio t. Diese Menge fällt hauptsächlich als Nebenprodukt beim Holzaufschluss für die Zellstofferzeugung in mehr oder weniger modifizierter Form in den Ablaugen (Schwarzlauge) an. Zum gegenwärtigen Zeitpunkt werden die Ablaugen und das darin enthaltende Lignin überwiegend verbrannt und thermisch zur Energiegewinnung genutzt. Neben der thermischen Verwertung rückt zunehmend auch die stoffliche Nutzung von Lignin in den Fokus des Interesses. Dabei haben sich im Wesentlichen drei Anwendungsbereiche herauskristallisiert:
a) Mit Vanillin wird sowohl chemisch als auch biochemisch ein hochwertiger, molekularer Aromastoff aus Lignin gewonnen.
b) Lignosulfonate, polymere Verbindungen basierend auf Lignin, (SulfitVerfahren) werden aufgrund ihrer besonderen Löslichkeitseigenschaften in Wasser für verschiedene Anwendungen im Bereich der Färbereien (Mineralfarben) oder Gerbereien bzw. als Papieradditive, als Zusatzstoffe im Bauwesen (Beton, Mauersteine, Spanplatten, Staubbindemittel, Gips) oder als Bestandteil in Pelletiermitteln (Tierfutter, Briketts) und Detergenzien (Bohrschlämme) eingesetzt.
c) Lignin als preisgünstiger Füllstoff oder Rezepturkomponente in thermoplastischen Polymerwerkstoffen bzw. in synthetischen Epoxidharzen, welche zur Herstellung von Formteilen durch Extrusion, Spritzguss, Pressen, Rapid Transfer Moulding verwendet werden können. Je nach Eigenschaftsprofil der Kompositmaterialien ergeben sich Anwendungen für Bauteile im Automobilbau, Transport- und Anlagenbau, Haushaltsgeräte (Gehäuse), Behälter, Geräte für die Medizintechnik, Elektrik und/oder Elektronik.

Die Verwendung von Lignin als Füllstoff in thermoplastischen Polymerwerkstoffen/Kunststoffen ist Gegenstand zahlreicher Publikationen. Hier ist der Fokus auf die Massenkunststoffe Polyethylen (PE), Polypropylen (PP) und Polyvinylchlorid (PVC) als Matrix ausgerichtet. Im Mittelpunkt der wissenschaftlichen Diskussionen steht, in welchem Maße
a) die Lignineigenschaften selbst (beeinflusst durch Herkunft des Lignins: Pflanzenart, Standort, das Aufschlussverfahren, die Derivatisierung/- Modifizierung/Funktionalisierung) und
b) die Wechselwirkung zwischen Füllstoff und Matrix
die resultierenden Kompositeigenschaften beeinflussen. Dabei zeigt sich, dass Lignine, die am Kraft-Prozess oder verschiedenen Organosolv-Verfahren entstammen, für die thermoplastische Verarbeitung gut geeignet sind. Das gilt sowohl für Thermoplaste mit Lignin als Füllstoff oder als Matrix (DE 198 520 67 A1). Hinsichtlich der Lignin-Modifizierung/Derivatisierung haben sich Epoxy-modifizierte Lignosulfonate (Cazacu G, Pascu MC, profire L, Kowarski Al, Mihaes M, Vasile C: Lignin role in a complex polyolefin blend. Ind. Crops Prod. 20 (2004) 261-273) und Ligninphthalat (Sailaja RRN, Deepthi MV: mechanical and thermal properties of compatibilized composites of polyethylene and esterified lignin. Mat. Design 31 (2010) 4369-4379) in Kombination mit einer polyolefinischen Matrix als vorteilhaft erwiesen. Die Verbesserung der Kompatibilität bzw. der Haftvermittlung zwischen thermoplastischer Matrix und Lignin-Partikel konnte bisher als dominierender positiver Einflussfaktor auf die resultierenden Kompositeigenschaften identifiziert werden.

All diesen Lösungsansätzen ist jedoch gemeinsam, dass die Verwendung von Lignin/Lignin-Derivaten zwar eine Erhöhung der Kompositsteifigkeit (E-Modul) mit sich bringt, jedoch gleichzeitig mit einer dramatischen Reduzierung von Festigkeit, Bruchdehnung und Schlagzähigkeit einhergeht. Der Effekt der Materialversprödung nimmt insbesondere mit höheren Ligningehalten (>20 Masse-%) dramatisch zu.

Ohne Zusatz von a) Verstärkungsfasern (kostenintensiv, Verschleiß der Verarbeitungsmaschinen) oder b) Weichmachern (Migration, Abnahme Festigkeit und Steifigkeit), was jedoch erhebliche Nachteile nach sich zieht, sind Kompositmaterialien mit höheren Ligningehalten gegenwärtig nicht marktfähig.

Die Verwendung von Lignin als Füllstoff in thermoplastischen Polymerwerkstoffen bewirkt zwar in den meisten Fällen eine Erhöhung der Kompositsteifigkeit, geht jedoch mit einer dramatischen Reduzierung der Festigkeit, Bruchdehnung und Schlagzähigkeit einher. Der Effekt der Materialversprödung nimmt insbesondere mit höheren Ligningehalten dramatisch zu und kann nur durch Verwendung von Verstärkungsfasern oder Weichmachern kompensiert werden. Diese Form der Additivierung ist jedoch sehr aufwändig und kostenintensiv und widerspricht dem Ansatz, mit Lignin als preisgünstigen Füllstoff und Polymersubstituent die Gesamtmaterialkosten zu reduzieren.

Ziel ist es daher, ein Kompositmaterial bereitzustellen, welches bevorzugt bei möglichst hohem Ligningehalt (z.B. >50 Masse-%) mindestens das mechanische Eigenschaftsniveau der ungefüllten Matrix erreicht, wobei die Eigenschaften Festigkeit und Schlagzähigkeit von übergeordneter Bedeutung sind.

Diese Aufgabe wird bezüglich eines mikrostrukturierten Kompositmaterials mit den Merkmalen des Patentanspruchs 1, bezüglich eines Verfahrens zur Herstellung des Kompositmaterials mit den Merkmalen des Patentanspruchs 15, bezüglich eines Formkörpers, eines Granulates oder eines Masterbatches aus dem erfindungsgemäßen Kompositmaterial mit den Merkmalen des Patentanspruchs 17 sowie bezüglich Verwendungszwecke des Kompositmaterials bzw. der Formteile mit den Merkmalen des Patentanspruchs 18 gelöst. Dabei stellen die jeweilig abhängigen Patentansprüche vorteilhafte Weiterbildungen dar.

Erfindungsgemäß wird somit ein mikrostrukturiertes Kompositmaterial angegeben, umfassend
a) eine Matrix, enthaltend mindestens eine Sorte eines thermoplastischen Kunststoffes, und
b) homogen in der Matrix verteilt mindestens eine Sorte Lignin und/oder mindestens ein Lignin-Derivat, wobei der Gesamtgehalt des mindestens einen Lignins und/oder des mindestens einen Ligninderivat, bezogen auf das gesamte Kompositmaterial von 1 bis 80 Gew.-% beträgt,
wobei das mindestens eine Lignin oder das dem mindestens einen Ligninderivat zugrundeliegende Lignin aus einer Nadelholz-, Laubholz-, oder Einjahrespflanzenquelle stammt und durch den Kraft-Prozess, das Sulfitverfahren oder durch Fermentation erhalten wurde,
wobei das mindestens eine Ligninderivat durch partielle oder vollständige Derivatisierung ausgewählt aus der Gruppe bestehend aus Veresterung, Veretherung, Urethanisierung oder eine Kombination der zuvor genannten Derivatisierungen der Hydroxylgruppen eines entsprechenden Lignins erhalten wurde,
dadurch gekennzeichnet,
dass die mindestens eine Sorte Lignin und/oder mindestens ein Ligninderivat in partikulärer Form vorliegt und die Querschnittsfläche der Partikel eine runde, annähernd runde, kreisförmige, annähernd kreisförmige, elliptische oder annähernd elliptische Geometrie aufweist,
dass 50 % der Partikel aus einer repräsentativen Anzahl von Partikeln (mindestens 200) einen Durchmesser (d 50 , Median), ermittelt entsprechend der Norm DIN ISO 9276-2, kleiner 5 um aufweisen und
dass mindestens ein Haftvermittler enthalten ist. Unter einem Lignin-Derivat wird dabei ein chemisch modifiziertes Lignin verstanden, bei dem insbesondere freie Hydroxyl-Gruppen chemisch modifiziert sind.

Maßgeblich bei der vorliegenden Erfindung ist somit, dass das als Füllstoff verwendete Lignin bzw. Lignin-Derivat in partikulärer Form vorliegt, wobei die Lignin- bzw. Lignin-Derivat-Partikel eine bestimmte Geometrie aufweisen. Die Geometrie dieser Partikel wird gemäß der vorliegenden Erfindung anhand der Querschnittsfläche in einer beliebigen Richtung und an beliebiger Stelle durch die Partikel beschrieben, die Querschnittsfläche ist erfindungsgemäß rund, kreisförmig bzw. elliptisch oder weist eine annähernd an diese idealen geometrischen Körper anmutende Geometrie auf. Unter annähernd rund bzw. kreisförmig bzw. elliptisch werden dabei Formen verstanden, die möglichst nahe an den idealen zugrundeliegenden geometrischen Körper herankommen. Annähernd kreisförmige bzw. elliptische Formen können beispielsweise

dadurch ausgeprägt sein, dass gewisse Abweichungen von dieser idealen Form zu beobachten sind, wie beispielsweise Eindellungen oder Ausbuchtungen der Partikel.

Überraschenderweise wurde festgestellt, dass durch die erfindungsgemäße Mikrostrukturierung des Kompositmaterials sogar noch bei sehr hohen Lignin-oder Lignin-Derivat- Gehalten, (z.B. 50 Masse·%), die mechanische Eigenschaften, wie z.B. Festigkeit, Steifigkeit und Schlag zähigkeit der unverstärkten Matrix nicht nur konserviert, sondern überraschenderweise deutlich übertroffen werden. Der Eigenschaftszugewinn insbesondere der Festigkeit und Schlagzähigkeit trotz hoher Lignin-Gehalte ist nur möglich, wenn eine bestimmte

Kompositstruktur und eine hinreichend gute Haftung zwischen Matrix und Füllstoff eingestellt werden. Das erfindungsgemäß mikrostrukturierte Kompositmaterial zeigt 36 mal höhere Schlagzähigkeiten und 10 mal höhere Kerbschlagzähigkeiten gegenüber dem Standardmaterial und bleibt darüber hinaus thermoplastisch verformbar und damit mit allen gängigen Kunststoffverarbeitungstechnologien prozessierbar (Extrusion, Spritzguss, Spinnen).

Der Einsatz von Lignin/Lingin-Derivaten als preisgünstiger Füllstoff und Polymersubstituent, der zudem als nachwachsender Rohstoff unerschöpflich zur Verfügung steht, trägt zudem dazu bei, die Gesamtmaterialkosten deutlich zu reduzieren.

Unter einer elliptischen oder annähernd elliptischen Geometrie wird dabei insbesondere verstanden, dass das Verhältnis von der Hauptachse zur Nebenachse einer entsprechenden Ellipse maximal 10 beträgt, bevorzugt mehr als 1 und bis maximal 5 beträgt. Erfindungsgemäß wird das Kompositmaterial dadurch gekennzeichnet, dass der arithmetische Mittelwert oder der mittlere Durchmesser d₅₀ aus einer repräsentativen Anzahl von Partikeln (mindestens 200) kleiner 5 µm, bevorzugt von 0,05 bis 5 µm, weiter bevorzugt von 0,1 bis 2 µm, besonders bevorzugt von 0,1 bis 1,5 µm beträgt.

Die oben angesprochenen mittleren Teilchendurchmesser werden dabei wie folgt bestimmt:
Ein Formteil oder das Granulat des erfindungsgemäßen mikrostrukturierten Kompositmaterial wird mittels einer scharfen Klinge (Mikrotom) angeschnitten (Anschnitt). Die freigelegte, glatte Schnittfläche wird mittels Mikroskop (Rasterelektronen- oder Lichtmikroskop) aufgenommen. Die Aufnahmen zeigen dann das Zweiphasensystem, welches aus kontinuierlicher Matrix und partikelförmigem Lignin besteht. Mittels Bildanalysesoftware (Analysis) werden die Durchmesser der Schnittflächen der Lignin-Partikel per Hand oder automatisiert vermessen. Zur besseren Kontrastierung von Matrix und Lignin-Partikel kann die Lignin-Phase selektiv durch wässrige Natronlauge herausgelöst werden. Die entstehenden Hohlräume bilden die Größe und Form der Lignin-Partikel exakt ab und können hinsichtlich ihres Durchmessers vermessen werden. Es werden mindestens 200, bevorzugt 600 Partikel hinsichtlich des Durchmessers vermessen und die ermittelten Werte nach DIN ISO 9276-1 in einer Häufigkeitsverteilung dargestellt. Aus dieser Verteilung werden die relevanten Kennwerte des arithmetische mittlere Partikeldurchmesser dₐᵣᵢₜₕ und des mittlere Partikeldurchmesser d₅₀ entsprechend der Norm DIN ISO 9276-2 ermittelt.

Weiter bevorzugt ist die Verteilung der Durchmesser relativ homogen. Bevorzugt ist die relative Standardabweichung des mittleren Durchmessers bzw. Äquivalenzdurchmessers der Partikel um den Mittelwert kleiner 100 %.

Der Gesamtgehalt des Lignins bzw. Lignin-Derivats kann dabei über einen weiten Bereich variiert werden. Bevorzugte Gesamtgehalte des Lignins bzw. Lignin-Derivats betragen dabei, bezogen auf das gesamte Kompositmaterial von 1 bis 99 Gew.-%, bevorzugt von 10 bis 80 Gew.-%, besonders bevorzugt von 20 bis 60 Gew.-%.

Dabei kann der Derivatisierungsgrad, bezogen auf die Anzahl der OH-Gruppen zwischen 0,1 und 100 %, bevorzugt von 0,1 bis 95 % betragen.

Die Substituenten der Derivate, d.h. die Rest der Derivatisierungsreagenzien mit Ausnahme der verknüpfenden Gruppe an das Lignin können bevorzugt ausgewählt sein aus aliphatischen, olefinischen und/oder aromatischen Verbindungen, die Heteroatome, insbesondere Sauerstoff, Stickstoff, Schwefel und/oder Phosphor enthalten können.

Weiter vorteilhaft kann das Kompositmaterial mindestens ein Haftvermittler enthalten, bevorzugt in einer Menge von 0,1 bis 40 Gew.-%, weiter bevorzugt von 1 bis 10 Gew.-%, insbesondere von 1 bis 3 Gew.-%.

Bevorzugte Haftvermittler sind dabei ausgewählt aus der Gruppe bestehend aus Diisocyanaten; Maleinsäureanhydrid gepfropften Polymeren oder Copolymeren, insbesondere Maleinsäureanhydrid gepfropftes Polyethylen, Polypropylen, Polystyrol, Poplyisobuten, Polyethylen-co-vinylacetat oder Polyethylen-co-octan sowie Mischungen oder Kombinationen hieraus, wobei bevorzugt der Pfropfungsgrad der Maleinsäureanhydrid gepfropften Polymeren oder Copolymeren von 0,0001 bis 90 %, weiter bevorzugt von 0,1 bis 10 %, besonders bevorzugt von 3 bis 8 %.

Der Haftvermittler kann dabei kovalent, insbesondere über mindestens eine Ester-, Ether-, Amid-, Amin-, Urethan- oder Siloxanbindung und/oder durch nebenvalente Bindungen, insbesondere Wasserstoffbrückenbindungen an die Partikel gebunden sein.

Bevorzugt weist der Haftvermittler ein zahlengemitteltes Molekulargewicht von 100 bis 500.000 g/mol, bevorzugt von 500 und 50.000 g/mol, besonders bevorzugt von 1.000 und 10.000 g/mol, auf.

Zusätzlich kann das Kompositmaterial ein oder mehrere Additive enthalten, wobei das oder die Additive bevorzugt ausgewählt sind aus der Gruppe bestehend aus olfaktorischen Substanzen, Substanzen zur Minimierung olfaktorischer Emissionen, Pigmente, Farbstoffen, UV- und/oder Lichtstabilisatoren, Flammschutzmitteln, Konservierungsstoffen, Antioxidantien, Naturfasern und/oder künstliche Fasern.

Bevorzugte thermoplastische Matrixpolymere sind ausgewählt aus der Gruppe bestehend aus Polyamiden, Kompositmaterial nach einem der vorhergehenden Ansprüche, dadurch gekennzeichnet, dass das thermoplastische Matrixpolymer ausgewählt ist aus der Gruppe bestehend aus Polyamiden, insbesondere Polyamid 11, 12, 6, 66, 6.10, 10.10, 10.12, 4.6, 6.12, 12.12, 6.9; Polyestern, insbesondere PET, PLA, PHB, PBSA; Polyethern; Cellulose oder Cellulosederivate; PVC, PVA, Vinylcopolymere, Polyolefine, insbesondere PE,PP, Polybutadien, Polybutylen; Polyurethane; Polycarbonate; Polyalkylenglycole, insbesondere PEG; Polyvinylpyridin; Poly(meth)acrylate, insbesondere PMMA; Polyvinylalkohole; Polyaniline sowie Kombinationen oder Blends aus den zuvor genannten Polymeren.

Die vorliegende Erfindung betrifft ebenso ein Verfahren zur Herstellung eines zuvor beschriebenen mikrostrukturierten Kompositmaterials. Das erfindungsgemäße Verfahren kann dabei auf zwei bevorzugte, jedoch gleichwertige Varianten ausgeführt werden.

Gemäß einer ersten Variante des erfindungsgemäßen Verfahrens wird mindestens eine Sorte Lignin und/oder mindestens ein Lignin-Derivat in eine Matrix, enthaltend mindestens eine Sorte eines thermoplastischen Kunststoffes bei Temperaturen oberhalb der Glasübergangstemperatur der mindestens einen Sorte Lignin eingearbeitet, so dass nach dem Einarbeiten die mindestens eine Sorte Lignin und/oder mindestens ein Lignin-Derivat in partikulärer Form vorliegt und die Querschnittsfläche der Partikel eine runde, annähernd runde, kreisförmige, annähernd kreisförmige, elliptische oder annähernd elliptische Geometrie aufweist.

Gemäß dieser Variante der Verfahrensführung stellt sich die erfindungsgemäße Geometrie der Partikel aus Lignin bzw. Lignin-Derivaten bei der Einarbeitung der Lignine bzw. Derivate hiervon in die thermoplastische Matrix ein. Erfindungsgemäß wird dabei eine Temperatur eingestellt, die oberhalb des Glaserweichungspunktes des jeweils eingesetzten Lignins bzw. Lignin-Derivates liegt. Wird eine Mischung aus Ligninen bzw. Lignin-Derivaten verwendet, bei der die einzelnen Sorten an Ligninen und/oder Lignin-Derivaten unterschiedliche Glasübergangstemperaturen aufweisen, wird eine Temperatur gewählt, die oberhalb der höchsten Glasübergangstemperatur der jeweiligen Lignine bzw. Derivate hiervon liegt. Somit ist gewährleistet, dass bei der Einarbeitung der Lignine bzw. Derivate diese in thermoplastischem Zustand vorliegen, so dass bei der Einarbeitung, bei der üblicherweise Scherkräfte auftreten, eine Verformung der jeweiligen ursprünglichen Ligninpartikel bzw. eine Aufteilung in kleine Tröpfchen etc. erfolgt, die nach Abschluss des Verfahrens, d.h. nach Erkaltung des erhaltenen thermoplastischen Kompositmaterials, mit der erfindungsgemäßen Geometrie in der Matrix vorliegen.

Eine zweite Variante des erfindungsgemäßen Verfahrens sieht vor, dass mindestens eine Sorte Lignin und/oder mindestens ein Lignin-Derivat in partikulärer Form vorliegt und die Querschnittsfläche der Partikel eine runde, annähernd runde, kreisförmige, annähernd kreisförmige, elliptische oder annähernd elliptische Geometrie aufweist und die mindestens eine Sorte Lignin und/oder mindestens ein Lignin-Derivat in eine Matrix, enthaltend mindestens eine Sorte eines thermoplastischen Kunststoffes eingearbeitet wird.

Entsprechende Lignin-Partikel bzw. Derivat-Partikel mit vorgegebener Geometrie können bereits aus den bereits zuvor angesprochenen Verfahren erhalten werden, beispielsweise aus dem literaturbekannten Kraft-Prozess, dem Organosolv-Prozess oder durch Fermentation.

Bevorzugt erfolgt das Einarbeiten der Partikel in die Matrix mittels Kneten und/oder Extrudieren in der Schmelze, mittels physikalischer Mischverfahren (als Festkörper) und die Formgebung anschließend durch Thermoforming/ Pressen/Sintern und/oder bei Verarbeitungstemperaturen von 50 bis 400 °C, bevorzugt von 100 und 300 °C, besonders bevorzugt von 150 bis 250 °C.

Die Erfindung betrifft ebenso einen Formkörper, Granulat oder einen Masterbatch enthaltend oder gebildet aus einem mikrostrukturiertem Kompositmaterial, wie zuvor stehend beschrieben.

Die Formkörper können dabei auf beliebige Art und Weise hergestellt werden, beispielsweise durch Extrusion, Spritzguss, Pressen, Sintern, Kalandrieren, Folienblasen, Schmelzspinnen, Compression Moulding und/oder Thermoforming, für Bauteile im Automobilbau, Transport- und/oder Verkehrswesen, Bauteile für die Industrieausrüstung, Maschinen- und Anlagenbau, Haushaltsgeräte, Behälter, Bauteile für die Elektrik oder Elektronik. Somit betrifft die Erfindung ebenso die Verwendung eines erfindungsgemäßen Kompositmaterials für die zuvor genannten Zwecke.

Die Erfindung wird anhand der nachfolgenden Beispiele näher erläutert, ohne die Erfindung auf die speziell dargestellten Parameter zu beschränken.

### Beispiel 1- Einstellung der Mikrostrukturierung der Ligninpartikel während der Compoundierung

Polyethylen, Haftvermittler (HV) und 50 Masse-% getrocknetes Lignin (pulvriges Substrat durch den Kraftprozess gewonnen) wurden nacheinander der Knetkammer eines vorgeheizten Innenmischers (W 350 der Fa. Brabender) zu dosiert und für eine definierte Zeit miteinander gemischt. Bei nahezu gleicher Rezeptur wurden 6 Materialien compoundiert, wobei das Verarbeitungsregime variiert wurde. Auf diese Weise erzeugte Compounds wurden nach Entnahme aus der Knetkammer in einer Kunststoffmühle zu Granulat verarbeitet und anschließend in einer Kolbenspritzgussmaschine zu Normprüfkörpern nach DIN EN ISO 527 verarbeitet. Ausgewählte mechanische Eigenschaften sind in Tabelle 1 zusammengefasst. Mit abnehmendem Partikeldurchmesser steigt die Kompositfestigkeit moderat, die Schlag- bzw. Kerbschlagzähigkeit sogar sprunghaft an. Die erfindungsgemäße Mikrostrukturierung der Komposite mit hinreichend kleinen Lignin-Partikeln wurde realisiert durch Anwendung von Verarbeitungstemperaturen T über der Glasübergangstemperatur des eingesetzten Lignins (Tg = 160°C). Für die Proben (Tabelle 1) 4-7 betrug die Verarbeitungstemperatur T=170°C. Um die Lignin-Partikel hinreichend zu dispergieren wurde die Mischzeit von Probe 4 bis Probe7 systematisch erhöht.

Tabelle 1: Zusammenfassung und Quantifizierung von Strukturparamtern, die den in der thermoplastischen Matrix gebundenen Lignin-Füllstoff charakterisieren, und die mechanischen Eigenschaften entsprechend mikrostrukturierter Komposite, hergestellt gemäß Einstellung der Mikrostrukturierung während der Compoundierung

| | Proben-Nr./ | 1 | 2 | 3 | 4 | 5 | 6 | 7 |
|---|---|---|---|---|---|---|---|---|
| | Verarbeitungsregime | | 116 | 117 | 187 | 204 | 189 | 207 |
| Eigenschaft | | PE | PE+ 50% Lignin | PE+ 50% Lignin | + HV | | | |
| Struktur (Lignin) | Partikelform (Querschnittsflä che) | - | Undefiniert/ vieleckig | Undefiniert/ vieleckig | Rund/ Elliptisch | Rund/ Elliptisch | Rund/ Elliptisch | Rund/ Elliptisch |
| | Partikeldurchm esser Mittelwert dₐᵣᵢₜₕ [µm] | - | > 6,50 | 6,37 | 1,13 | 0,81 | 0,76 | < 0,76 |
| | Median d₅₀ [µm] | - | | 4,74 | 0,88 | 0,75 | 0,75 | k.A. |
| | Mittlerer Partikelabstand [µm] | - | | - | 0,55 | 0,33 | k.A. | k.A. |
| Mechanik (Kompos it) | Zugfestigkeit [MPa] | 25,9 | 16,2 | 26,2 | 34,0 | 35,5 | 33,5 | 35,5 |
| | E-Modul [GPa] | 1,20 | 2,18 | 2,10 | 2,20 | 2,17 | 2,00 | 2,10 |
| | Kerbschlagzähigkeit Charpy [kJ/m²] | 6,4 | 0,9 | 1,0 | 2,0 | 3,5 | 5,0 | 7,9 |
| | Schlagzähigkeit Charpy [kJ/m²] | 38 (n.b.) | 1,8 | 7,2 | 28 | 63 (n.b.) | 64 (n.b.) | 64 (n.b.) |

| | | | | | | | | |
|---|---|---|---|---|---|---|---|---|
| n.b. nicht gebrochen, k.A. keine Angaben | | | | | | | | |

Aus der zuvor stehenden Tabelle ist ersichtlich, dass die speziell additivierten Komposite (Probe-Nummern 4, 5, 6 und 7) nicht-additivierten (Probe-Nr. 1) bzw. Lignin-additivierten, jedoch mit undefinierter bzw. eckiger Geometrie der Partikel (Probe-Nr. 2 und 3) deutlich überlegene Eigenschaften aufweisen. Dies wird insbesondere an der Zugfestigkeit, der Kerbschlagzähigkeit sowie der Schlagzähigkeit ersichtlich, die einen deutlichen sprunghaften Anstieg dieser Eigenschaften erkennen lässt.

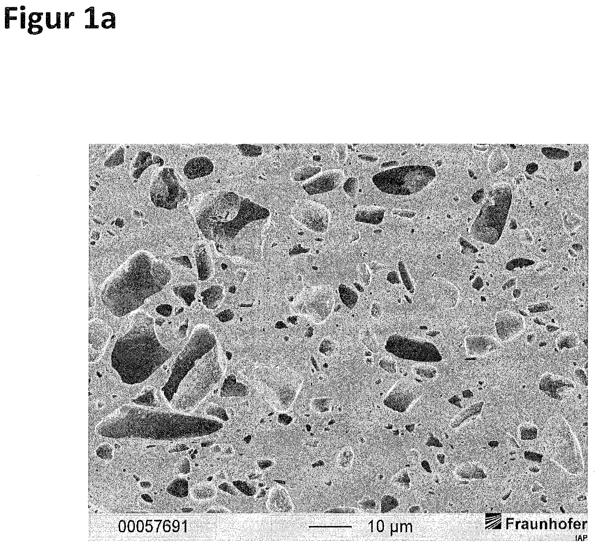

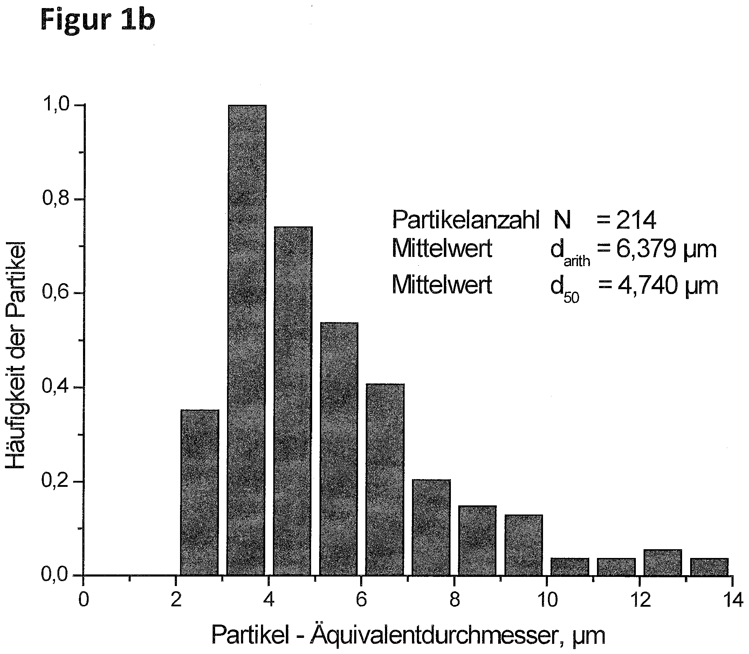

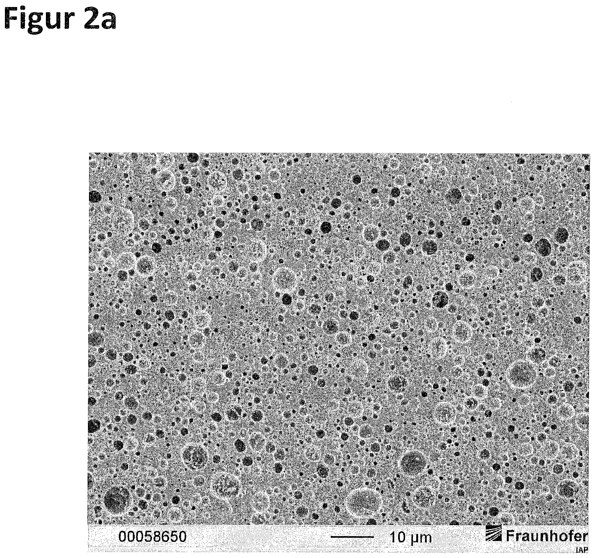

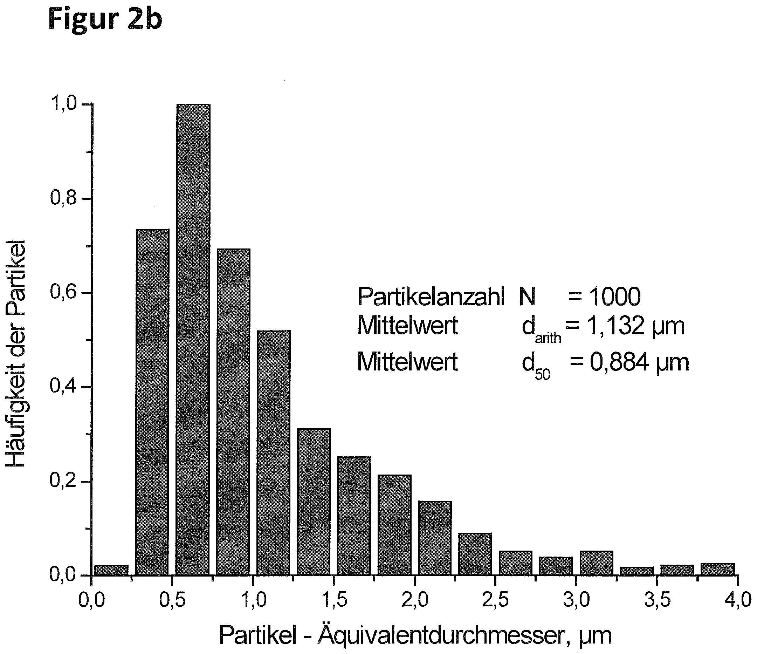

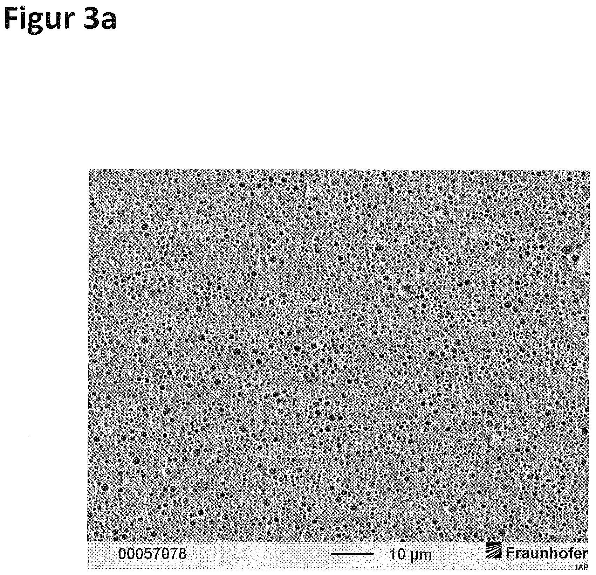

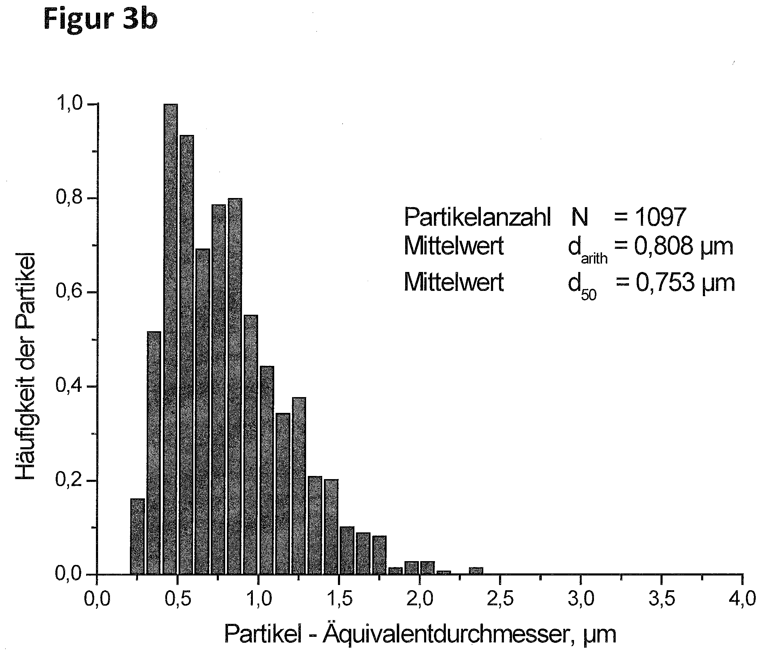

Die nachfolgend abgebildeten Fig. 1a, 2a und 3a sind dabei rasterelektronische mikroskopische Aufnahmen vom Querschnitt eines Kompositmaterials, bestehend aus PE, Haftvermittler und 50 % Lignin gemäß den Proben mit den Nummern 3 (Fig. 1), 4 (Fig. 2) sowie 5 (Fig. 3). Um die Lignin-Partikel zu visualisieren bzw. zu kontrastieren wurden sie für die rasterelektronische mikroskopische Aufnahme aus dem Matrix-Polymer herausgelöst, wodurch Hohlräume im Komposit entstanden, die die Form und Größe der Lignin-Partikel exakt abbilden. Eine repräsentative Anzahl dieser Hohlräume wurde vermessen, in einem Histogramm grafisch dargestellt (jeweils Fig. b) und aus der Verteilungskurve die charakteristischen Kennwerte, der Mittelwert der Teilchengrößen sowie der Medien bestimmt. Aus der Tabelle ist erkennbar, dass mit abnehmendem mittleren Durchmesser der Lignin-Partikel sowie mit spezifischer Geometrie die mechanischen Eigenschaften deutlich bzw. sogar sprunghaft ansteigen.

Das oben angesprochene Problem somit erfindungsgemäß dadurch gelöst wird, dass eine bestimmte Kompositstruktur, d.h. Größe und Form der Ligninpartikel in der polymeren Matrix eingestellt wird. Die Einstellung der Form und Größe der Ligninpartikel wird erfindungsgemäß durch einen speziellen Compoundierprozess (siehe Beispiele) realisiert. Überraschenderweise können die Verarbeitungsparameter erfindungsgemäß so eingestellt wurden, dass der Eintrag an Temperatur und Scherenergie im Zusammenspiel mit einem geeigneten Haftvermittler (HV) sowie dessen prozentualen Anteil an der Gesamtrezeptur strukturbestimmend sind, d.h. die erfindungsgemäße Mikrostruktur realisiert wird. Durch Anwendung geeigneter Verarbeitungsbedingungen und Rezepturen konnten verschiedene Partikelgrößen bzw. interpartikuläre Abstände eingestellt werden. Ein zweiter erfindungsgemäßer Lösungsweg besteht darin, Ligninpartikel in einem Compound einzusetzen, die schon vor der Compoundierung die gewünschten strukturellen Eigenschaften aufweisen. Überraschenderweise beeinflusst die Partikelgröße des Lignins die Eigenschaften des Kompositmaterials erheblich. Dabei konnte gefunden werden, dass Partikel mit kleinerem Durchmesser unter der Bedingung einer kreisrunden oder elliptischen Querschnittsfläche die Kompositeigenschaften, insbesondere die Schlagzähigkeit, deutlich positiv beeinflussen. Das erfindungsgemäße mikrostrukturierte Kompositmaterial Nr. 7 zeigt 36-mal höhere Schlagzähigkeiten und 10-mal höhere Kerbschlagzähigkeiten gegenüber dem Standardmaterial Nr. 2 (Tabelle 1).

### Beispiel 2 Bereitstellung von Lignin-Partikel mit der erfindungsgemäßen Geometrie

Ausgangsprodukt ist die, bei der Lignin-Isolierung (aus Laubholz, Nadelholz, Einjahrespflanzen) mittels Kraft-, Organosolv-, Sulfitverfahren, anfallende Schwarzlauge, in welcher Lignin in gelöster Form vorliegt. Durch Absenken des pH-Wertes (pH<7) der Schwarzlauge fällt Lignin in partikulärer Form aus. Durch Nukleierung dieser Schwarzlauge mit mikro- oder nanoskaligen organischen oder anorganischen Partikeln und/oder durch Absenken des pH-Wertes in den stark sauren Bereich (pH<4) können hinreichend kleine Lignin-Partikel generiert werden. Diese wiederum können durch einen Mahlprozess noch weiter zerkleinert und durch Siebung fraktioniert werden. Die gemahlenen und fraktionierten Lignin-Partikel können des Weiteren einer Wärmebehandlung (T>T_{g, Lignin}) unterzogen werden damit eine Kugel-, kugelähnliche oder ellipsoidische Form entstehen kann. Nach dieser Prozedur hergestellte Lignin-Partikel weisen dann eine Geometrie (Größe und Form) auf, die sich im Sinne der Erfindung vorteilhaft auf die Verstärkung von Thermoplast-Materialien auswirkt. Die gemäß Beispiel 2 dargestellten Lignin-Partikel wiesen somit bereits die erfindungswesentliche Geometrie auf und können anschließend einer Derivatisierung unterzogen werden oder direkt in eine thermoplastische Matrix eingearbeitet werden.

## Patentansprüche

1. Mikrostrukturiertes Kompositmaterial, umfassend
a) eine Matrix, enthaltend mindestens eine Sorte eines thermoplastischen Kunststoffes, und
b) homogen in der Matrix verteilt mindestens eine Sorte Lignin und/oder mindestens ein Ligninderivat,
wobei der Gesamtgehalt des mindestens einen Lignins und/oder des mindestens einen Ligninderivat, bezogen auf das gesamte Kompositmaterial von 1 bis 80 Gew.-% beträgt,
wobei das mindestens eine Lignin oder das dem mindestens einen Ligninderivat zugrundeliegende Lignin aus einer Nadelholz-, Laubholz-, oder Einjahrespflanzenquelle stammt und durch den Kraft-Prozess, das Sulfitverfahren oder durch Fermentation erhalten wurde,
wobei das mindestens eine Ligninderivat durch partielle oder vollständige Derivatisierung ausgewählt aus der Gruppe bestehend aus Veresterung, Veretherung, Urethanisierung oder eine Kombination der zuvor genannten Derivatisierungen der Hydroxylgruppen eines entsprechenden Lignins erhalten wurde,
**dadurch gekennzeichnet,**
**dass** die mindestens eine Sorte Lignin und/oder mindestens ein Ligninderivat in partikulärer Form vorliegt und die Querschnittsfläche der Partikel eine runde, annähernd runde, kreisförmige, annähernd kreisförmige, elliptische oder annähernd elliptische Geometrie aufweist,
**dass** 50 % der Partikel aus einer repräsentativen Anzahl von Partikeln (mindestens 200) einen Durchmesser (d₅₀, Median), ermittelt entsprechend der Norm DIN ISO 9276-2, kleiner 5 µm aufweisen und
**dass** mindestens ein Haftvermittler enthalten ist.

2. Kompositmaterial nach Anspruch 1, **dadurch gekennzeichnet, dass** bei der elliptischen oder annähernd elliptischen Geometrie das Verhältnis von Hauptachse zu Nebenachse maximal 10 beträgt, bevorzugt von >1 bis 5 beträgt.

3. Kompositmaterial nach einem der vorhergehenden Ansprüche, **dadurch gekennzeichnet, dass** der arithmetische Mittelwert aus einer repräsentativen Anzahl von Partikeln (mindestens 200) kleiner 5 µm, bevorzugt von 0,05 bis 5 µm, weiter bevorzugt von 0,1 bis 2 µm, besonders bevorzugt von 0,1 bis 1,5 µm beträgt, oder dass 50 % der Partikel aus einer repräsentativen Anzahl von Partikeln (mindestens 200) einen Durchmesser (d₅₀, Median) von 0,05 bis 5 µm, bevorzugt von 0,1 bis 2 µm, besonders bevorzugt von 0,1 bis 1,5 µm aufweisen.

4. Kompositmaterial nach einem der vorhergehenden Ansprüche, **dadurch gekennzeichnet, dass** der Gesamtgehalt des mindestens einen Lignins und/oder des mindestens einen Ligninderivat, bezogen auf das gesamte Kompositmaterial von 10 bis 80 Gew.-%, bevorzugt von 20 bis 60 Gew.-% beträgt.

5. Kompositmaterial nach Anspruch 1, **dadurch gekennzeichnet, dass** der Derivatisierungsgrad, bezogen auf die Anzahl der OH-Gruppen zwischen 0,1 und 100 %, bevorzugt von 0,1 bis 95 % beträgt.

6. Kompositmaterial nach Anspruch 1, **dadurch gekennzeichnet, dass** Substituenten der Derivate ausgewählt sind aus der Gruppe bestehend aus aliphatischen, olefinischen und/oder aromatischen Verbindungen, die Heteroatome, insbesondere Sauerstoff, Stickstoff, Schwefel und/oder Phosphor enthalten können.

7. Kompositmaterial nach einem der vorhergehenden Ansprüche, **dadurch gekennzeichnet, dass** der Haftvermittler in einer Menge von 0,1 bis 40 Gew.-%, bevorzugt von 1 bis 10 Gew.-%, insbesondere von 1 bis 3 Gew.-% enthalten ist.

8. Kompositmaterial nach vorhergehendem Anspruch, **dadurch gekennzeichnet, dass** der mindestens eine Haftvermittler ausgewählt ist aus der Gruppe bestehend aus Diisocyanaten; Maleinsäureanhydrid gepfropften Polymeren oder Copolymeren, insbesondere Maleinsäureanhydrid gepfropftes Polyethylen, Polypropylen, Polystyrol Poplyisobuten, Polyethylen-co-vinylacetat oder Polyethylen-co-octan sowie Mischungen oder Kombinationen hieraus, wobei bevorzugt der Pfropfungsgrad der Maleinsäureanhydrid gepfropften Polymeren oder Copolymeren von 0,0001 bis 90 %, weiter bevorzugt von 0,1 bis 10 %, besonders bevorzugt von 3 bis 8 % beträgt.

9. Kompositmaterial nach einem der beiden vorhergehenden Ansprüche, **dadurch gekennzeichnet, dass** der Haftvermittler kovalent, insbesondere über mindestens eine Ester-, Ether-, Amid-, Amin-, Urethan- oder Siloxanbindung und/oder durch nebenvalente Bindungen, insbesondere Wasserstoffbrückenbindungen an die Partikel gebunden ist.

10. Kompositmaterial nach einem der Ansprüche 7 bis 9, dadurch gekennzeichnen, dass das zahlengemittelte Molekulargewicht des Haftvermittlers von 100 bis 500.000 g/mol, bevorzugt von 500 und 50.000 g/mol, besonders bevorzugt von 1.000 und 10.000 g/mol beträgt.

11. Kompositmaterial nach einem der vorhergehenden Ansprüche, **dadurch gekennzeichnet, dass** Additive enthalten sind, bevorzugt ausgewählt aus der Gruppe bestehend aus olfaktorischen Substanzen, Substanzen zur Minimierung olfaktorischer Emissionen, Pigmente, Farbstoffen, UV- und/oder Lichtstabilisatoren, Flammschutzmitteln, Konservierungsstoffen, Antioxidantien, Naturfasern und/oder künstliche Fasern.

12. Kompositmaterial nach einem der vorhergehenden Ansprüche, **dadurch gekennzeichnet, dass** das thermoplastische Matrixpolymer ausgewählt ist aus der Gruppe bestehend aus Polyamiden, insbesondere Polyamid 11, 12, 6, 66, 6.10, 10.10, 10.12, 4.6, 6.12, 12,12, 6.9; Polyestern, insbesondere PET, PLA, PHB, PBSA; Polyethern; Cellulose oder Cellulosederivate; PVC, PVA, Vinylcopolymere, Polyolefine, insbesondere Polyethylen, Polypropylen, Polybutadien, Polybutylen; Polyurethane; Polycarbonate; Polyalkylenglycole, insbesondere PEG; Polyvinylpyridin; Poly(meth)acrylate, insbesondere PMMA; Polyvinylalkohole; Polyaniline sowie Kombinationen oder Blends aus den zuvor genannten Polymeren.

13. Verfahren zur Herstellung eines mikrostrukturiertes Kompositmaterials nach einem der vorhergehenden Ansprüche, bei dem
a) mindestens eine Sorte Lignin und/oder mindestens ein Ligninderivat in eine Matrix, enthaltend mindestens eine Sorte eines thermoplastischen Kunststoffes bei Temperaturen oberhalb der Glasübergangstemperatur der mindestens einen Sorte Lignin eingearbeitet wird, so dass nach dem Einarbeiten die mindestens eine Sorte Lignin und/oder mindestens ein Ligninderivat, in partikulärer Form vorliegt und die Querschnittsfläche der Partikel eine runde, annähernd runde, kreisförmige, annähernd kreisförmige, elliptische oder annähernd elliptische Geometrie aufweist, oder
b) mindestens eine Sorte Lignin und/oder mindestens ein Ligninderivat in partikulärer Form vorliegt und die Querschnittsfläche der Partikel eine runde, annähernd runde, kreisförmige, annähernd kreisförmige, elliptische oder annähernd elliptische Geometrie aufweist und die mindestens eine Sorte Lignin und/oder mindestens ein Ligninderivat in eine Matrix, enthaltend mindestens eine Sorte eines thermoplastischen Kunststoffes eingearbeitet wird.

14. Verfahren nach vorhergehendem Anspruch, **dadurch gekennzeichnet, dass** die Einarbeitung der Partikel in die Matrix
a) mittels Kneten und/oder Extrudieren in der Schmelze, und/oder
b) bei Verarbeitungstemperaturen von 50 bis 400 °C, bevorzugt von 100 und 300 °C, besonders bevorzugt von 150 bis 250 °C und/oder
c) mittels physikalischer Mischverfahren (als Festkörper) und die Formgebung anschließend durch Thermoforming/Pressen/Sintern erfolgt.

15. Formkörper, Granulat oder Masterbatch, enthaltend oder gebildet aus einem mikrostrukturierten Kompositmaterial nach einem der Ansprüche 1 bis 12.

16. Verwendung eines mikrostrukturierten Kompositmaterials nach einem der Ansprüche 1 bis 12 zur Herstellung von Formteilen durch Extrusion, Spritzguss, Pressen, Sintern, Kalandrieren, Folienblasen, Schmelzspinnen, Compression Moulding und/oder Thermoforming, für Bauteile im Automobilbau, Transport- und/oder Verkehrswesen, Bauteile für die Industrieausrüstung, Maschinen- und Anlagenbau, Haushaltsgeräte, Behälter, Bauteile für die Elektrik oder Elektronik.

## Claims

1. Microstructured composite material comprising
a) a matrix, comprising at least one sort of a thermoplastic plastic material, and
b) distributed homogeneously in the matrix, at least one sort of lignin and/or at least one lignin derivative,
wherein the total content of the at least one lignin and/or of the at least one lignin derivative is, relative to the overall composite material, of 1 to 80 wt.-%,
wherein the at least one lignin or the lignin forming the basis of the at least one lignin derivative originates from a coniferous wood-, deciduous wood- or annual plant source and was obtained preferably by the Kraft-process, the sulphite process or by fermentation,
wherein the at least one lignin derivative was obtained by partial or complete derivatisation, selected from the group consisting of esterification, etherification, urethanisation or a combination of the previously mentioned derivatisations of the hydroxyl groups of a corresponding lignin,
**characterised in that**
the at least one sort of lignin and/or at least one lignin derivative is present in particulate form and the cross-sectional area of the particles has a round, approximately round, circular, approximately circular, elliptical or approximately elliptical geometry,
50 % of the particles of a representative number of particles (at least 200) have a diameter (d₅₀, median), determined according to the DIN ISO 9276-2 standard, of less than 5 µm and
at least one adhesive is contained.

2. Composite material according to claim 1, **characterised in that**, in the case of the elliptical or approximately elliptical geometry, the ratio of the main axis to the subsidiary axis is at most 10, preferably of > 1 to 5.

3. Composite material according to one of the preceding claims, **characterised in that** the arithmetic average of a representative number of particles (at least 200) is less than 5 µm, preferably of 0.05 to 5 µm, further preferred of 0.1 to 2 µm, particularly preferred of 0.1 to 1.5 µm, or 50% of the particles of a representative number of particles (at least 200) have a diameter (d₅₀, median) of 0.05 to 5 µm, preferably of 0.1 to 2 µm, particularly preferred of 0.1 to 1.5 µm.

4. Composite material according to one of the preceding claims, **characterised in that** the total content of the at least one lignin and/or of the at least one lignin derivative is, relative to the overall composite material, of 10 to 80% by weight, preferably of 20 to 60% by weight.

5. Composite material according claim 1, **characterised in that** the derivatisation degree, relative to the number of OH groups, is between 0.1 and 100%, preferably of 0.1 to 95%.

6. Composite material according to claim 1, **characterised in that** substituents of the derivatives are selected from the group consisting of aliphatic, olefinic and/or aromatic compounds which can comprise heteroatoms, in particular oxygen, nitrogen, sulphur and/or phosphorus.

7. Composite material according to one of the preceding claims, **characterised in that** the adhesive is contained in a quantity of 0.1 to 40% by weight, preferably of 1 to 10% by weight, in particular of 1 to 3% by weight.

8. Composite material according to the preceding claim, **characterised in that** the at least one adhesive is selected from the group consisting of diisocyanates; polymers or copolymers grafted with maleic anhydride, in particular polyethylene, polypropylene, polystyrene, polyisobutene, polyethylene co-vinyl acetate or polyethylene co-octane and also mixtures or combinations hereof, grafted with maleic anhydride, preferably the grafting degree of the polymers or copolymers grafted with maleic anhydride being of 0.0001 to 90%, further preferred of 0.1 to 10%, particularly preferred of 3 to 8%.

9. Composite material according to one of the two preceding claims, **characterised in that** the adhesive is bonded covalently to the particles, in particular via at least one ester-, ether-, amide-, amine-, urethane- or siloxane bond and/or by semivalent bonds, in particular hydrogen bridge bonds.

10. Composite material according to one of the claims 7 to 9, **characterised in that** the number-averaged molecular weight of the adhesive is of 100 to 500,000 g/mol, preferably of 500 and 50,000 g/mol, particularly preferred of 1,000 and 10,000 g/mol.

11. Composite material according to one of the preceding claims, **characterised in that** additives are contained, selected preferably from the group consisting of olfactory substances, substances for minimising olfactory emissions, pigments, colourants, UV- and/or light stabilisers, flame retardants, preservatives, antioxidants, natural fibres and/or synthetic fibres.

12. Composite material according to one of the preceding claims, **characterised in that** the thermoplastic matrix polymer is selected from the group consisting of polyamides, in particular polyamide 11, 12, 6, 66, 6.10, 10.10, 10.12, 4.6, 6.12, 12.12, 6.9; polyesters, in particular PET, PLA, PHB, PBSA; polyethers; cellulose or cellulose derivatives; PVC, PVA, vinyl copolymers, polyolefins, in particular polyethylene, polypropylene, polybutadiene, polybutylene; polyurethanes; polycarbonates; polyalkylene glycols, in particular PEG; polyvinylpyridine; poly(meth)acrylates, in particular PMMA; polyvinyl alcohols; polyanilines and also combinations or blends of the previously mentioned polymers.

13. Method for the production of a microstructured composite material according to one of the preceding claims, in which
a) at least one sort of lignin and/or at least one lignin derivative is incorporated in a matrix, comprising at least one sort of a thermoplastic plastic material, at temperatures above the glass transition temperature of the at least one sort of lignin so that, after incorporation, the at least one sort of lignin and/or at least one lignin derivative is present in particulate form and the cross-sectional area of the particles has a round, approximately round, circular, approximately circular, elliptical or approximately elliptical geometry, or
b) at least one sort of lignin and/or at least one lignin derivative is present in particulate form and the cross-sectional area of the particles has a round, approximately round, circular, approximately circular, elliptical or approximately elliptical geometry and the at least one sort of lignin and/or at least one lignin derivative is incorporated in a matrix, comprising at least one sort of a thermoplastic plastic material.

14. Method according to the preceding claim, **characterised in that** the incorporation of the particles in the matrix is effected
a) by means of kneading and/or extrusion in the melt, and/or
b) at processing temperatures of 50 to 400°C, preferably of 100 and 300°C, particularly preferred of 150 to 250°C, and/or
c) by means of physical mixing processes (as solid bodies) and the shaping subsequently by thermoforming/pressing/sintering.

15. Moulded article, granulate or master batch comprising or formed from a microstructured composite material according to one of the claims 1 to 12.

16. Use of a microstructured composite material according to one of the claims 1 to 12 for the production of moulded parts by extrusion, injection moulding, pressing, sintering, calendering, film-blowing, melt-spinning, compression moulding and/or thermoforming, for components in automobile construction, transport and/or communications, components for industrial equipment, machine- and plant construction, household appliances, containers, components for electrics or electronics.

## Revendications

1. Matériau composite microstructuré, comprenant
a) une matrice contenant au moins un type d'un matériau plastique thermoplastique, et
b) réparti d'une manière homogène dans la matrice, au moins un type de lignine et/ou au moins un dérivé de lignine,
dans lequel la teneur totale en l'au moins une lignine et/ou en au moins un dérivé de lignine, rapportée au matériau composite total, est de 1 à 80 % en poids,
l'au moins une lignine, ou la lignine à base de l'au moins un dérivé de lignine, ayant été obtenue à partir d'une source de bois résineux, de bois feuillu ou de plante annuelle, ou par le procédé kraft, par le procédé au sulfite ou par fermentation,
l'au moins un dérivé de lignine ayant été obtenu par dérivatisation partielle ou complète, choisie dans le groupe consistant en une estérification, une éthérification, une uréthannisation ou une combinaison des dérivatisations mentionnées ci-dessus des groupes hydroxyle d'une lignine correspondante,
**caractérisé**
**en ce que** l'au moins un type de lignine et/ou au moins un dérivé de lignine se présente sous une forme particulaire, et l'aire en section transversale des particules présente une géométrie arrondie, approximativement arrondie, circulaire, approximativement circulaire, elliptique ou approximativement elliptique,
**en ce que** 50 % des particules d'un nombre représentatif de particules (au moins 200) présentent un diamètre (d₅₀, médian), déterminé conformément à la norme DIN ISO 9276-2, inférieur à 5 µm, et
**en ce qu'**il contient au moins un promoteur d'adhérence.

2. Matériau composite selon la revendication 1, **caractérisé en ce que**, pour une géométrie elliptique ou approximativement elliptique, le rapport du grand axe au petit axe est au maximum de 10, de préférence > 1 à 5.

3. Matériau composite selon l'une des revendications précédentes, **caractérisé en ce que** la moyenne arithmétique d'un nombre représentatif de particules (au moins 200) est inférieure à 5 µm, de préférence de 0,05 à 5 µm, d'une manière plus préférée de 0,1 à 2 µm, d'une manière particulièrement préférée de 0,1 à 1,5 µm, ou que 50 % des particules d'un nombre représentatif de particules (au moins 200) présentent un diamètre (d₅₀, médian) de 0,05 à 5 µm, de préférence de 0,1 à 2 µm, d'une manière particulièrement préférée de 0,1 à 1,5 µm.

4. Matériau composite selon l'une des revendications précédentes, **caractérisé en ce que** la teneur totale en l'au moins une lignine et/ou en l'au moins un dérivé de lignine, par rapport au matériau composite total, est de 10 à 80 % en poids, de préférence de 20 à 60 % en poids.

5. Matériau composite selon la revendication 1, **caractérisé en ce que** le degré de dérivatisation, rapporté au nombre des groupes OH, est compris entre 0,1 et 100 %, de préférence entre 0,1 et 95 %.

6. Matériau composite selon la revendication 1, **caractérisé en ce que** des substituants des dérivés sont choisis dans le groupe consistant en les composés aliphatiques, oléfiniques et/ou aromatiques, qui peuvent contenir des hétéroatomes, en particulier d'oxygène, d'azote, de soufre et/ou de phosphore.

7. Matériau composite selon l'une des revendications précédentes, **caractérisé en ce qu'**il contient le promoteur d'adhérence en une quantité de 0,1 à 40 % en poids, de préférence de 1 à 10 % en poids, en particulier de 1 à 3 % en poids.

8. Matériau composite selon la revendication précédente, **caractérisé en ce que** l'au moins un promoteur d'adhérence est choisi dans le groupe consistant en les diisocyanates ; les polymères ou copolymères à greffage d'anhydride maléique, en particulier le polyéthylène, le polypropylène, le polystyrène, le polyisobutène, le polyéthylène-co-acétate de vinyle ou le polyéthylène-co-octane à greffage d'anhydride maléique, ainsi que les mélanges ou combinaisons de ceux-ci, auquel cas de préférence le degré de greffage des polymères ou copolymères à greffage d'anhydride maléique est de 0,0001 à 90 %, d'une manière plus préférée de 0,1 à 10 %, d'une manière particulièrement préférée de 3 à8%.

9. Matériau composite selon l'une des deux revendications précédentes, **caractérisé en ce que** le promoteur d'adhérence est lié aux particules par une liaison covalente, en particulier par au moins une liaison ester, éther, amide, amine, uréthanne ou siloxane, et/ou par des liaisons par des valences secondaires, en particulier des liaisons par pont hydrogène.

10. Matériau composite selon l'une des revendications 7 à 9, **caractérisé en ce que** la masse moléculaire moyenne en nombre du promoteur d'adhérence est de 100 à 500 000 g/mol, de préférence de 500 à 50 000 g/mol, d'une manière particulièrement préférée de 1000 à 10 000 g/mol.

11. Matériau composite selon l'une des revendications précédentes, **caractérisé en ce qu'**il contient des additifs choisis de préférence dans le groupe consistant en les substances olfactives, les substances destinées à minimiser les émissions olfactives, les pigments, les colorants, les stabilisants UV et/ou les photostabilisants, les agents d'ignifugation, les conservateurs, les antioxydants, les fibres naturelles et/ou les fibres synthétiques.

12. Matériau composite selon l'une des revendications précédentes, **caractérisé en ce que** le polymère de matrice thermoplastique est choisi dans le groupe consistant en les polyamides, en particulier le polyamide 11, 12, 6, 66, 6.10, 10.10, 10.12, 4.6, 6.12, 12.12, 6.9 ; les polyesters, en particulier le PET, le PLA, le PHB, le PBSA ; les polyéthers ; la cellulose ou les dérivés de la cellulose ; le PVC, le PVA, les copolymères vinyliques, les polyoléfines, en particulier le polyéthylène, le polypropylène, le polybutadiène, le polybutylène ; les polyuréthannes ; les polycarbonates ; les polyalkylèneglycols, en particulier le PEG ; la polyvinylpyridine ; les poly(méth)acrylates, en particulier le PMMA ; les poly(alcools vinyliques) ; les polyanilines, ainsi que les combinaisons ou mélanges des polymères mentionnés ci-dessus.

13. Procédé de fabrication d'un matériau composite microstructuré selon l'une des revendications précédentes, dans lequel
a) on incorpore au moins un type de lignine et/ou au moins un dérivé de lignine dans une matrice contenant au moins un type d'un matériau plastique thermoplastique, à des températures supérieures à la température de transition vitreuse de l'au moins un type de lignine, de telle sorte que, après l'incorporation, l'au moins un type de lignine et/ou au moins un dérivé de lignine se présente sous forme particulaire, et que l'aire en section transversale des particules présente une géométrie arrondie, approximativement arrondie, circulaire, approximativement circulaire, elliptique ou approximativement elliptique, ou
b) au moins un type de lignine et/ou au moins un dérivé de lignine se présente sous forme particulaire, et l'aire en section transversale des particules présente une géométrie arrondie, approximativement arrondie, circulaire, approximativement circulaire, elliptique ou approximativement elliptique, et l'au moins un type de lignine et/ou au moins un dérivé de lignine est incorporé dans une matrice contenant au moins un type d'un matériau plastique thermoplastique.

14. Procédé selon la revendication précédente, **caractérisé en ce que** l'incorporation des particules dans la matrice a lieu
a) par malaxage et/ou par extrusion à l'état fondu, et/ou
b) à des températures de mise en oeuvre de 50 à 400°C, de préférence de 100 à 300°C, d'une manière particulièrement préférée de 150 à 250°C, et/ou
c) au moyen de procédé de mélange physique (à l'état solide), le façonnage étant réalisé ensuite par thermoformage/pressage/frittage.

15. Objet moulé, granulé ou mélange-maître, contenant un matériau composite microstructuré selon l'une des revendications 1 à 12 ou étant formé à partir de celui-ci.

16. Utilisation d'un matériau composite microstructuré selon l'une des revendications 1 à 12 pour fabriquer des objets moulés par extrusion, moulage par injection, pressage, frittage, calandrage, soufflage de feuilles, filage par fusion, moulage par compression et/ou thermoformage pour des composants en construction automobile, transport et/ou trafic, des composants pour les équipements industriels, la construction de machines et d'installations, les appareils ménagers, les récipients, les composants pour l'électricité ou l'électronique.
